Europäisches Patentamt

European Patent Office

Office européen des brevets

(19)

(11) EP 0 766 368 A1

(12) ## DEMANDE DE BREVET EUROPEEN

(43) Date de publication:
02.04.1997 Bulletin 1997/14

(51) Int Cl.⁶: **H02K 17/16, H02K 15/02**

(21) Numéro de dépôt: **96402072.1**

(22) Date de dépôt: **27.09.1996**

(84) Etats contractants désignés:
**CH DE ES GB IT LI NL**

(30) Priorité: **29.09.1995 FR 9511468**

(71) Demandeur: **TECHNICATOME Société Technique pour l'Energie Atomique**
**91192 Gif-sur-Yvette Cedex (FR)**

(72) Inventeur: **Chaix, Jean-Edmond**
**04860 Pierrevert (FR)**

(74) Mandataire: **Dubois-Chabert, Guy et al**
**Société de Protection des Inventions**
**25, rue de Ponthieu**
**75008 Paris (FR)**

(54) **Moteur électrique asynchrone discoidal**

(57) Le moteur électrique asynchrone discoïdal présente des bobinages (13) du stator (1A, 1B) et des barreaux radiaux du rotor (2) noyés dans des encoches (11, 22) ouvertes par une fente (11, 21) de très faible largeur.

Ces fentes (11, 21) et ces encoches (12, 22) peuvent être usinées par électrochimie au moyen d'un fil.

Application aux moteurs électriques asynchrones discoïdaux à bobinage noyé dans le stator et à structure en roue de charrette sur le rotor.

FIG. 1

## Description

Domaine de l'invention

L'invention concerne les moteurs électriques asynchrones discoïdaux, comme ceux à rotors en court-circuit, utilisés en particulier avec des pompes dans le but de pomper des débits importants de fluide à des pressions allant de 10 à 200 bars ($10^6$ à $10^7$ Pa). De tels ensembles peuvent être utilisés notamment pour le pompage des effluents pétroliers ou pour équiper certains navires sous-marins.

Art antérieur et problème posé

Il est connu d'utiliser des moteurs asynchrones discoïdaux pour leurs performances spécifiques et surtout pour leur encombrement limité. En effet, plusieurs types de moteurs discoïdaux comprennent donc un seul stator de forme discoïdale, donc d'un encombrement axial très limité. Le stator peut être constitué de deux parties placées de part et d'autre des deux faces radiales du rotor discoïdal, ces deux parties portant les bobinages électriques enroulés et placés en regard des parties électriques du rotor. Les bobinages du stator sont souvent enroulés de manière grossière et/ou à l'extérieur du stator. Ceci comporte des inconvénients relatifs notamment à la régularité du champ tournant et à la mauvaise utilisation du volume de matière actif (fer + cuivre).

On éprouve donc le besoin de concevoir des stators avec des enroulements ou bobinages noyés régulièrement distribués dans la structure du stator ne faisant pas saillie à l'extérieur de celui-ci.

Résumé de l'invention

Dans ce but, l'objet principal de l'invention est un moteur électrique asynchrone discoïdal comprenant :

- un rotor de forme discoïdale possédant deux faces radiales et étant monté tournant autour d'un axe de rotation ; et
- un stator composé de deux parties placées de part et d'autre des faces radiales du rotor et possédant lui-même deux faces radiales sur chacune desquelles sont placés des bobinage en regard du rotor.

Selon l'invention, les bobinages du stator sont dans des encoches radiales du stator qui ont chacune une fente de faible largeur, par rapport à l'ouverture principale de l'encoche, de sorte que chaque encoche est quasiment fermée. Cette disposition est prise pour permettre l'insertion des fils dans les encoches tout en minimisant la perméance de fuite du bec de l'encoche.

Dans une réalisation préférée de l'invention, les bobinages sont entourés d'une gaine en acier inoxydable.

De préférence, les encoches ont leur axe qui ne rencontre pas l'axe du stator, mais passe à proximité.

De préférence, le rotor a sur chaque face radiale une structure électrique en roue de charrette avec deux anneaux, l'un interne, l'autre externe et des barreaux radiaux placés dans des encoches radiales.

De même, le rotor peut également avoir sur chaque face radiale une structure électrique en roue de charrette avec des barreaux radiaux qui sont légèrement inclinés, c'est-à-dire dont leurs axes respectifs ne croisent pas l'axe de rotation du rotor, mais ne passe pas loin.

Dans la réalisation préférentielle du rotor, les barreaux radiaux sont chacun placé dans une encoche radiale.

Pour assurer au moteur à rotor en court-circuit un couple de démarrage satisfaisant, les encoches des barreaux radiaux peuvent avoir deux sections de surfaces différentes et placées à des profondeurs différentes.

Le deuxième objet principal de l'invention est un procédé de fabrication des encoches du stator et du rotor, tel qu'il a été défini plus haut.

Selon l'invention, cet usinage est effectué de manière électrochimique avec un fil de largeur L inférieure ou égale à la largeur de la fente de l'encoche.

Liste des figures

L'invention et ses différentes caractéristiques techniques seront mieux comprises à la lecture des différentes figures représentant respectivement :

- figure 1, en vue cavalière éclatée, la structure générale du moteur selon l'invention ;
- figure 2, en coupe partielle, une première section possible des barreaux et de l'encoche du rotor ;
- figure 3, une coupe frontale du rotor illustrant une disposition possible des barreaux ;
- figure 4, en coupe transversale, une structure possible du rotor ;
- figure 5, en coupe partielle, une réalisation de l'encoche du stator ;
- figure 6, une deuxième réalisation possible des barreaux et de la rainure du rotor ;
- figure 7, le schéma électrique d'une première partie du stator ;
- figure 8, le schéma électrique d'une deuxième partie du stator ;
- figure 9, le schéma électrique de la connexion des deux bobinages du stator.

Description détaillée d'un mode de réalisation de l'invention

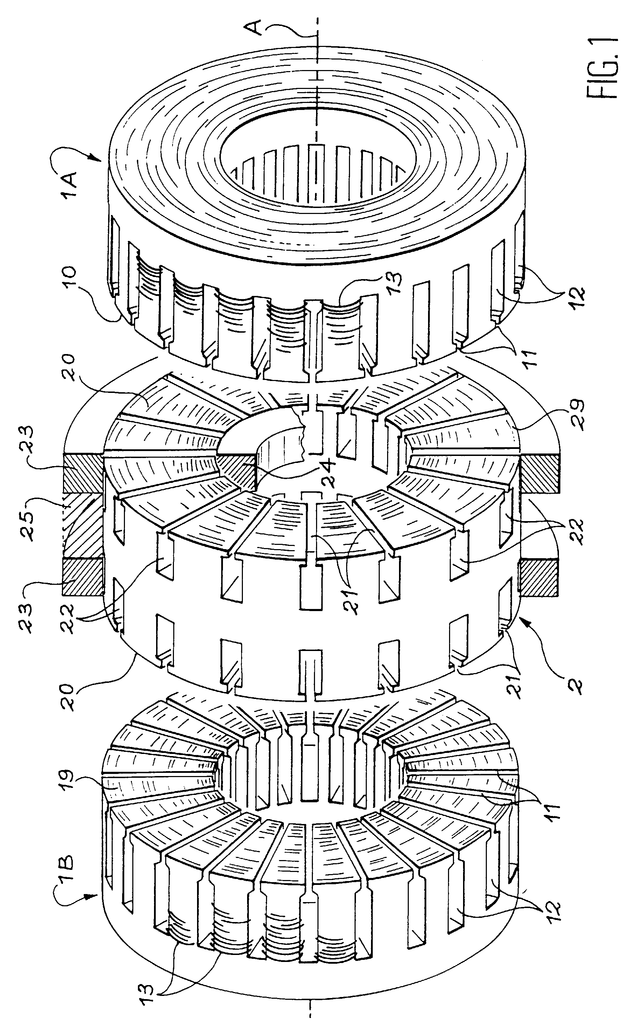

En référence à la figure 1, le moteur selon l'invention a la structure suivante.

Le stator est composé de deux parties 1A et 1B placées de part et d'autre du rotor 2 qui doit tourner autour d'un axe de rotation A du moteur. Sur cette figure, a été représentée simplement la structure porteuse de chacun de ces éléments. Les deux parties 1A et 1B du stator sont constituées principalement chacune d'un ruban de matériau électromagnétique enroulé sur lui-même, constituant pour chacun d'eux, une structure annulaire. La structure de ces deux parties 1A et 1B est obtenue en enroulant un feuillard plat 19 sur un moyeu.

Chacune de ces parties 1A et 1B du stator possède une face radiale 10 placée en regard du rotor 2. Sur cette face radiale 10 sont pratiquées des fentes 11 qui donnent l'accès chacune à une encoche radiale 12.

En correspondance, sur les deux faces radiales 20 du rotor 2, sont pratiquées des mêmes fentes 21 débouchant chacune dans une encoche 22.

Les deux parties 1A et 1B du stator sont complétées par des bobinages 13, enroulés dans des encoches 12 pour constituer les enroulements ou les bobinages de l'ensemble des phases. On constitue ainsi alternativement les trois séries de bobinages des trois phases qui alternent à chaque pas, le nombre de pas, c'est-à-dire le nombre d'encoches radiales 12 par pôle et par phase, étant généralement un nombre entier. Dans certains cas particuliers, il peut être fractionnaire. Le nombre total d'encoches 12 est toujours un multiple de trois pour un bobinage triphasé.

La structure du rotor 2 est également obtenue par enroulement d'un feuillard électromagnétique 29.

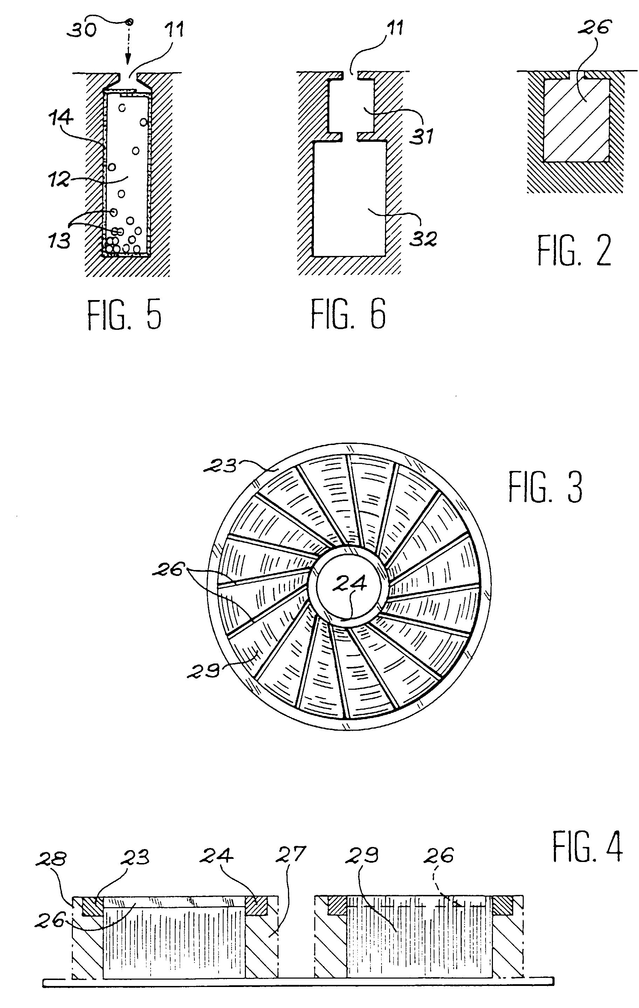

Dans les encoches usinées 22 de ce rotor 2, sont placés des barreaux, non représentés sur cette figure 1, mais référencés 26 sur la figure 2, de métal conducteur, tel que de l'aluminium constituant les bras radiaux d'une structure conductrice en roue de charrette, comme le montre la figure 3. Les extrémités des barreaux radiaux sont reliées les unes aux autres par deux anneaux internes 24 et deux anneaux externes 23 qui court-circuitent ainsi tous les barreaux. Cet ensemble constitue une structure en roue de charrette. On peut également envisager qu'un seul anneau externe et qu'un seul anneau interne relient les barreaux radiaux entre eux. Cependant, pour des commodités de réalisation, chaque cage ou roue de charrette dispose d'un anneau externe 23 et d'un anneau interne 24. Une bague centrale externe 25 et une bague centrale interne non représentée peuvent également être placées entre les anneaux 23 et 24 pour assurer une tenue mécanique de la tôle enroulée constituant l'ossature du rotor 2.

Comme le montre la figure 3, pour réduire les trous de couple pendant la phase de démarrage du moteur et pour obtenir un moteur plus silencieux, on peut envisager que les encoches radiales 22 soient, non pas parfaitement radiales, c'est-à-dire perpendiculaires à l'axe général A du moteur, mais ayant leur axe ne rencontrant pas cet axe A du rotor, tout en passant à proximité de celui-ci. Cette disposition s'apparente à celle des rayons d'une roue de bicyclette. Une telle structure peut également être prévue pour les bobinages et les encoches du stator.

En référence à la figure 4, le montage du rotor peut être effectué à l'aide de deux bagues de montage l'une interne 27, l'autre externe 28, entre lesquelles le feuillard 29 est enroulé. Des décrochements sont prévus pour pouvoir placer les anneaux externes 23 et internes 24.

En référence aux figures 5 et 6, l'usinage des encoches radiales 12 du stator et de leurs fentes étroites 11 se fait, selon l'invention, par électrochimie au moyen d'un fil 30. En effet, le fil d'usinage électrochimique 30 est placé dans la direction de l'encoche 12 et de la fente 11. Il est alors déplacé perpendiculairement à son axe en décrivant toute la section de la fente 11 et de l'encoche radiale 12. Il est ainsi possible d'usiner des encoches radiales 12 de n'importe quelle forme, comme celles des figures 5 et 6, la largeur de la fente 11 étant au minimum égale au fil à bobiner.

La figure 5 montre que les bobinages 13 des stators peuvent être entourés d'une gaine isolante diélectrique 14 pour isoler les bobinages par rapport à la masse.

On précise que l'usinage des encoches du rotor peut être effectué de la même manière.

La section des encoches du rotor décrite par la figure 6 montre une encoche radiale comportant deux cavités successives 31 et 32 reliées entre elles, la première débouchant sur la fente 11. Ces deux sections successives 31 et 32 sont également remplies par deux bobinages ou barreaux de sections différentes. Ceci permet au rotor de pouvoir démarrer avec un couple suffisamment grand, avec un courant de démarrage acceptable.

Dans la réalisation décrite par cette description, le rotor possède seize encoches 22. En correspondance, les deux stators possèdent chacun vingt-quatre encoches 12.

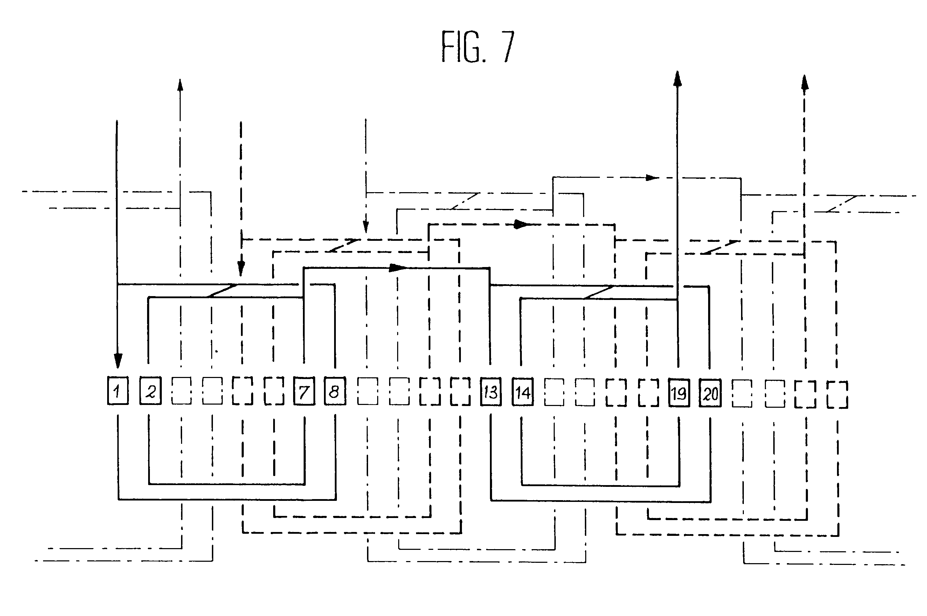

En référence à la figure 7, et en numérotant les vingt-quatre encoches, le bobinage du premier stator peut commencer à l'encoche numérotée 1. Chaque phase occupe deux encoches consécutives quatre fois de suite avec un décalage de six encoches correspondant à un pas polaire. La première phase, dont le bobinage commence à l'encoche 1, se termine au niveau de l'encoche 19. Les entrées des trois phases sont ainsi décalées successivement de huit encoches ou 120° et occupent les vingt-quatre encoches de ce premier stator.

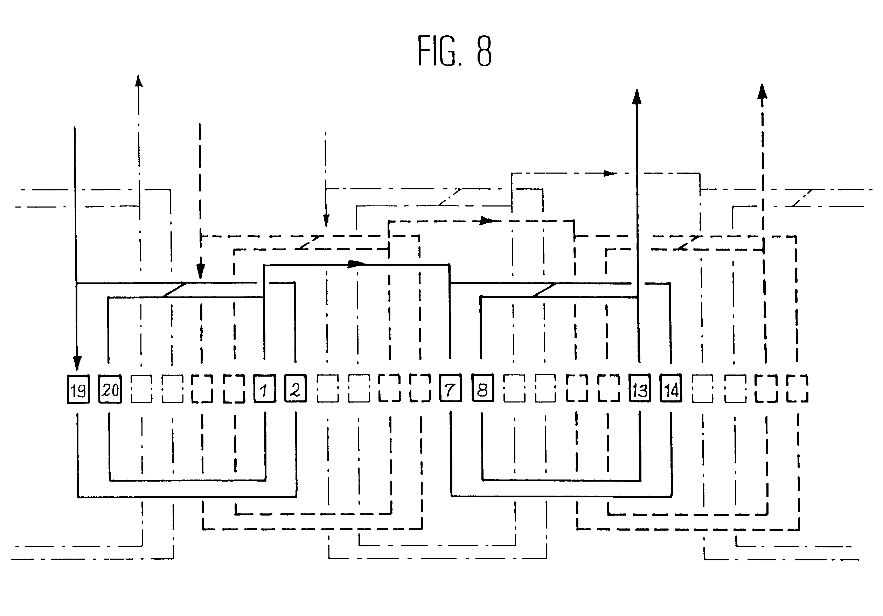

En référence à la figure 8, le bobinage du deuxième stator commence alors à l'encoche 19 pour se terminer, pour la même phase, à l'encoche 13. Les trois phases de ce deuxième stator sont également disposées en alternance.

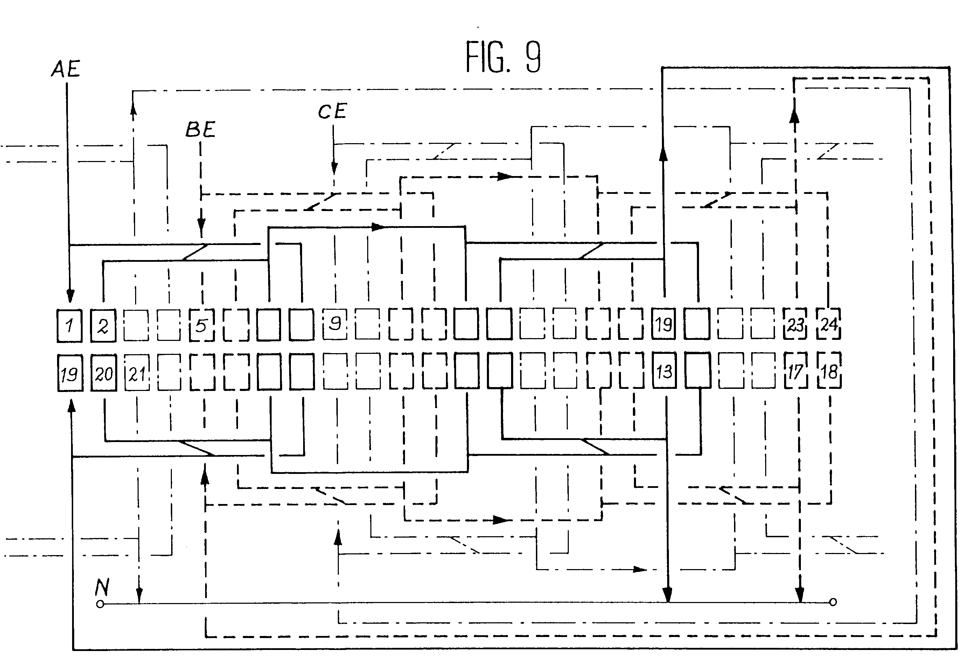

La figure 9 illustre le positionnement et la connexion des deux stators entre eux. On remarque que ces deux stators sont décalés angulairement de six encoches permettant de réaliser un décalage d'un pas polaire. De plus, on connecte la sortie 19 de la première phase du premier stator avec l'entrée 19 de la première phase du deuxième stator. Il en est de même pour les deux autres phases. En outre, on connecte ensemble les sorties 13, 17 et 21 du deuxième stator sur un même neutre. Les entrées des trois phases AE, BE et CE sont réalisées sur les entrées des trois phases du premier stator, c'est-à-dire sur les encoches 1, 5 et 9. Cette disposition permet d'obtenir un champ tournant pratiquement axial.

Dans le bobinage de la réalisation décrite, il y a quatre pôles, 2 p paires de pôles par phase, avec un enroulement en bobines et par "pôles conséquents". Avec vingt quatre encoches, = Z au total, le nombre d'encoches par pôle et par phase $m = \frac{Z}{3 \times 2 p} = 2$.

Une bobine occupe quatre encoches. Les conducteurs Aller des deux premières encoches de la bobine sont décalés de six encoches = 3 x m par rapport aux conducteurs Retour de cette même bobine.

De façon générale, ce décalage vaut 3.m pour un bobinage par "pôles conséquents" et 3.$\frac{m}{2}$ pour un bobinage "par pôles" si m est un multiple de 2.

De façon générale, les deux stators 1A et 1B sont strictement identiques. Chaque stator comporte le même nombre total d'encoches Z qui est multiple de trois pour les moteurs triphasés. Chaque bobinage est caractérisé par le nombre d'encoches par pôle et par phase $m = \frac{Z}{3 \times 2 p}$. Ce nombre est généralement entier mais dans des applications particulières, il peut être fractionnaire. Dans ce cas particulier, les bobines ou les sections constituées d'une même phase ne sont pas identiques, mais les trois phases restent identiques au décalage angulaire de 120° près.

Pour chaque stator, les phases n° 2 et n° 3 sont identiques à la phase n° 1 à 120° et à 240° près, donc à 2.m et 4.m pas d'encoche près.

Les stators 1A et 1B sont bobinés de façon identique. Le raccordement des bobinages des deux stators 1A et 1B se fait de la façon suivante. On dispose les deux stators 1A et 1B face à face, les deux faces bobinées en regard. On fait coïncider l'encoche 1 du stator 1A avec l'encoche 1 du stator 1B. On fait ensuite tourner le stator 1A ou le stator 1B d'un angle = 3.$m \cdot \frac{360°}{Z}$.

Les phases 1 des stators 1A et 1B sont connectées en série. De cette façon, la phase 1 résultante a son entrée correspondant à celle de la phase 1 du stator 1A et sa sortie correspondant à celle de la phase 1 du stator 1B.

Pour les phases 2 et 3, on procède de façon identique.

**Revendications**

1. Moteur électrique asynchrone discoïdal comprenant :

   - un rotor (2) de forme discoïdale possédant deux faces radiales (20) et étant monté tournant autour d'un axe de rotation (A) ;
   - un stator composé de deux parties (1A, 1B) placées de part et d'autre des faces radiales (20) du rotor (2) possédant lui-même deux faces radiales (10) sur chacune desquelles sont placés en regard du rotor (2) des bobinages (13),

caractérisé en ce que les bobinages (13) du stator (1A, 1B) sont placés dans des encoches radiales (12) qui ont une fente (11) de faible largeur, de sorte que chaque encoche (12) est quasiment fermée.

2. Moteur selon la revendication 1, caractérisé en ce que les deux parties (1A, 1B) du stator ont leurs bobinages (13) identiques, mais décalés d'un pas polaire.

3. Moteur selon la revendication 1, caractérisé en ce que les bobinages (13) du stator (1A, 1B) sont entourés d'une gaine (14) en matériau diélectrique isolant.

4. Moteur selon la revendication 1, caractérisé en ce que le rotor (2) a une structure électrique sur chaque face radiale (20) en roue de charrette, avec deux anneaux externe (23) et interne (24) et des barreaux radiaux placés dans des encoches radiales (22).

5. Moteur selon la revendication 1, caractérisé en ce que les encoches (12) du stator (1A, 1B) ont leur axe qui ne rencontre pas l'axe (A) du rotor (2), mais passe à proximité.

6. Moteur selon la revendication 4, caractérisé en ce que les encoches (22) du rotor (2) ont leur axe qui ne rencontre pas l'axe (A) du rotor (2), mais qui passe à proximité.

7. Moteur selon la revendication 4, caractérisé en ce que les encoches (22) du rotor (2) ont une fente (21) de faible largeur de sorte que chaque encoche (22) est quasiment fermée.

8. Moteur selon la revendication 6, caractérisé en ce que les encoches (22) du rotor (2) ont chacune deux cavités (31, 32) à des profondeurs différentes pour permettre au moteur de pouvoir démarrer avec un couple suffisamment grand, avec un courant de démarrage acceptable.

9. Procédé de fabrication d'encoches (12, 22) du stator (1A, 1B) et du rotor (2) d'un moteur électrique asynchrone discoïdal par usinage électrochimique au moyen d'un fil (30) de largeur inférieure ou égale à la largeur de la fente (11, 21) de chacune des encoches (12, 22).

FIG.1

EP 0 766 368 A1

FIG. 5

FIG. 6

FIG. 2

FIG. 3

FIG. 4

FIG. 7

# FIG. 8

EP 0 766 368 A1

FIG. 9

**Office européen des brevets**

# RAPPORT DE RECHERCHE EUROPEENNE

Numero de la demande

EP 96 40 2072

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | CH-A-648 442 (MICRO ELECTRIC AG) 15 Mars 1985 <br> * colonne 3, ligne 8 - page 4, ligne 63; figures 1-5 * <br> --- | 1,6,7 | H02K17/16 <br> H02K15/02 |
| A | US-A-1 861 059 (C. E. JOHNSON) 31 Mai 1932 <br> * figures 1-3 * <br> --- | 1,6,7 | |
| A | GB-A-2 228 626 (WARNER RICHARD JAMES) 29 Août 1990 <br> abrégé <br> * figure 1 * <br> --- | 1,4 | |
| A | EP-A-0 052 179 (CARD O MATIC PTY LTD) 26 Mai 1982 <br> * figures 1,2,7 * <br> --- | 1,6,7 | |
| A | FR-A-2 037 011 (LICENTIA) 31 Décembre 1970 <br> * figure 1 * <br> ----- | 8 | |

**DOMAINES TECHNIQUES RECHERCHES (Int.Cl.6)**

H02K

Le présent rapport a été établi pour toutes les revendications

| Lieu de la recherche | Date d'achèvement de la recherche | Examinateur |
|---|---|---|
| LA HAYE | 19 Décembre 1996 | Zoukas, E |